# FASCICULE DE BREVET EUROPEEN

(11) **EP 2 363 942 B1**
(45) Date de publication et mention de la délivrance du brevet: **19.04.2017**
(21) Numéro de dépôt: 11305203.9
(22) Date de dépôt: 25.02.2011
(51) Int. Cl.: H02K 5/136, F04D 27/02, F04D 29/52, F04D 29/64, F04D 27/00, H02K 11/33

(54) **Ventilateur comprenant un boîtier anti-déflagration**
Lüfter mit einem explosionsgeschützten Gehäuse
Ventilator with an explosion-proof casing

(30) Priorité: 26.02.2010 FR 1051380
(43) Date de publication de la demande: 07.09.2011
(73) Titulaire: TECHNOFAN, 31700 Blagnac (FR)
(72) Inventeur: Pautis, Olivier, 31330 Merville (FR); Sentenac, Nicolas, 31140 Aucamville (FR)
(74) Mandataire: Lavoix

(56) Documents cités:
- WO-A1-2007/020040
- DE-A1- 3 012 715
- DE-A1- 19 723 913
- FR-A1- 2 922 610

## Description

La présente invention concerne un ventilateur du type comprenant :
- un premier module électromécanique comportant une roue portée par un arbre accouplé à un moteur d'entraînement ;
- un deuxième module mécanique comportant un corps délimitant un espace de réception du premier module électromécanique dans lequel sont reçus la roue et le moteur d'entraînement ; et
- un troisième module électronique comportant une pluralité de composants électroniques.

Les documents FR-2 922 610, WO-2007/0200 40 et DE-197 23 913 décrivent par exemple des ventilateurs de ce type.

On connaît des ventilateurs de ce type utilisés dans les circuits de ventilation des avions pour assurer la circulation de l'air dans les gaines de ventilation.

De tels ventilateurs fonctionnent dans un environnement contenant des vapeurs de carburant. Du fait de la présence de nombreux composants électroniques sur le ventilateur et de cet environnement, le risque de départs d'incendie ou de déflagration est assez important.

Les ventilateurs connus ne permettent pas de contenir un tel incendie ou une telle déflagration en n'empêchant pas la propagation d'une flamme.

En outre, de tels ventilateurs ne permettent pas d'évacuer efficacement les liquides de condensation, ce qui peut entraîner à terme des disfonctionnements des ventilateurs.

Enfin, les conceptions actuelles de tels ventilateurs ne sont pas optimisées en termes de fabrication. Notamment, l'intégration de composants électroniques dans ces ventilateurs ne se fait pas de façon optimisée, ces composants étant rapportés et fixés sur le corps des ventilateurs les uns après les autres en fonction de l'espace disponible autour du corps.

L'un des buts de l'invention est de proposer un ventilateur simple à fabriquer qui permette de contenir la propagation d'un incendie ou d'une déflagration en empêchant la propagation d'une flamme dans l'environnement du ventilateur.

A cet effet, l'invention a pour objet un ventilateur du type précité, dans lequel le troisième module électronique comporte un boîtier dans lequel est logée la pluralité de composants électroniques, le boîtier comprenant un échappement de protection contre les déflagrations comprenant une paroi supérieure et deux parois inclinées s'étendant de part et d'autre de la paroi supérieure de sorte à former un espace s'étendant sensiblement axialement entre la surface supérieure du boîtier et la paroi supérieure afin de permettre l'évacuation des surpressions en cas de déflagration.

Le ventilateur selon l'invention peut comporter une ou plusieurs des caractéristiques suivantes :
- le boîtier comprend un capot de forme sensiblement complémentaire au boîtier, la pluralité de composants électroniques étant logée entre ledit boîtier et ledit capot ;
- l'échappement est monté sur le capot, l'espace s'étendant entre la surface supérieure du capot et la paroi supérieure de l'échappement ;
- l'espace est cloisonné par deux parois d'extrémités s'étendant de part et d'autre de la paroi supérieure sensiblement perpendiculairement à la direction axiale et par une pluralité de parois verticales s'étendant dans l'espace entre les parois d'extrémités ;
- les parois verticales comprennent chacune une ouverture, les ouvertures étant agencées pour former des chicanes à l'intérieur de l'espace afin de permettre la circulation de l'air et des liquides dans l'espace tout en empêchant la propagation d'une flamme dans ledit espace ;
- une des parois d'extrémité comprend une ouverture permettant l'évacuation de la surpression et des liquides de l'espace ;
- le boîtier est monté de manière amovible sur le corps du deuxième module mécanique ;
- le premier module électromécanique comporte un corps redresseur du flux gazeux monté de manière amovible sur le corps du deuxième module mécanique ; et
- le premier module électromécanique et le troisième module électronique sont reliés l'un à l'autre au moyen de câbles électriques.

L'invention a également pour objet un système aéronautique caractérisé en ce qu'il comprend un ventilateur tel que défini ci-dessus.

D'autres aspects et avantages de l'invention apparaîtront à la lecture de la description qui va suivre, donnée uniquement à titre d'exemple et faite en se référant aux dessins annexés, dans lesquels :
- la Figure 1 est une vue en perspective à l'état monté d'un ventilateur selon l'invention ;
- la Figure 2 est une vue en perspective à l'état éclaté du ventilateur de la Figure 1 ;
- la Figure 3 est une vue en perspective à l'état éclaté d'un module électromécanique du ventilateur de la Figure 1 ;
- la Figure 4 est une vue en perspective à l'état éclaté d'un module électronique du ventilateur de la Figure 1 ;

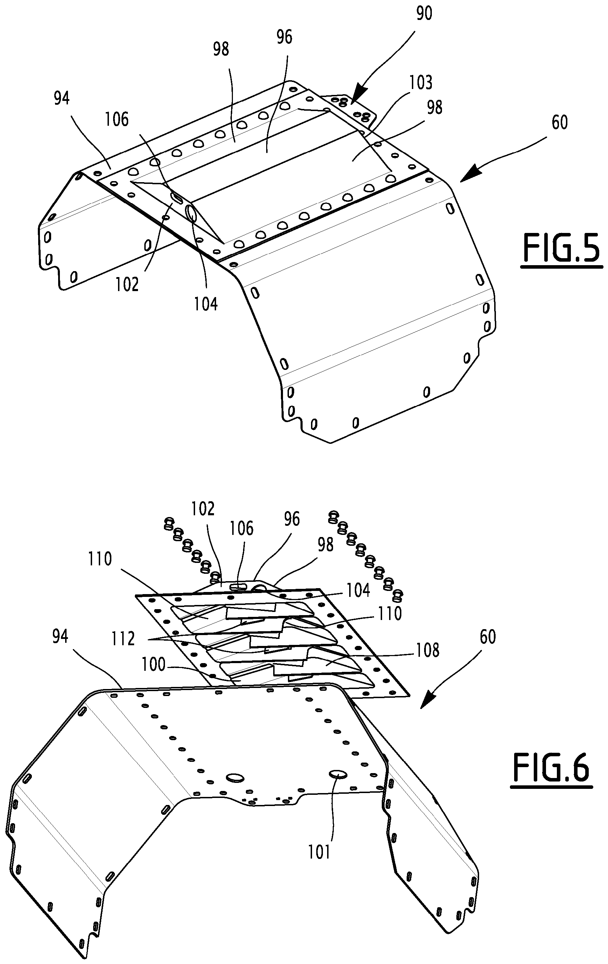

- la Figure 5 est une vue en perspective du capot fermant le boîtier du module électronique ; et
- la Figure 6 est une vue en perspective éclatée du capot de la Figure 5.

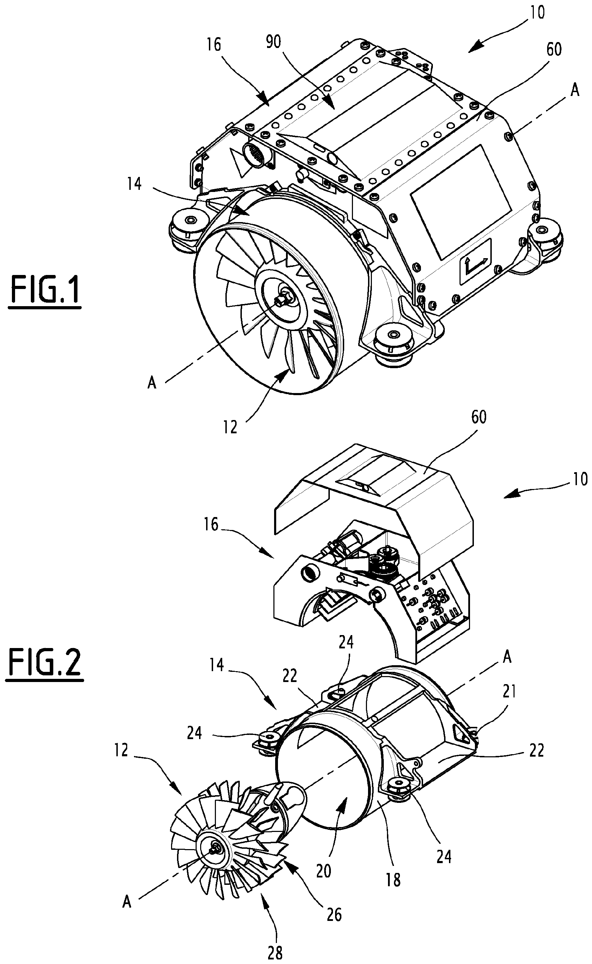

La Figure 1 illustre un ventilateur 10 destiné à être implanté dans un circuit de ventilation d'un avion.

Le ventilateur 10 comprend un premier module électromécanique 12, un deuxième module mécanique 14 dans lequel est logé le module électromécanique 12 et un troisième module électronique 16 monté sur le module mécanique 14.

En référence à la Figure 2, le module mécanique 14 comporte un corps 18 de forme sensiblement cylindrique d'axe longitudinal A-A délimitant un espace 20 de réception du module électromécanique 12.

Le module mécanique 14 comporte deux brides diamétralement opposées 22 de fixation du module électronique 16, les deux brides de fixation 22 étant identiques et disposées de façon symétrique par rapport à un plan vertical médian passant par l'axe longitudinal A-A.

Chaque bride de fixation 22 fait saillie sensiblement radialement vers l'extérieur depuis le corps 18 et s'étend sensiblement axialement le long du corps 18.

Le module mécanique 14 comporte des moyens d'amortissement des vibrations subies et/ou générées par le ventilateur 10. Dans l'exemple décrit ici, les moyens d'amortissement comprennent quatre silentblocs 24 disposés chacun de part et d'autre des brides de fixation 22.

Le module électromécanique 12 est reçu dans l'espace de réception 20 du corps 18 du module mécanique 14.

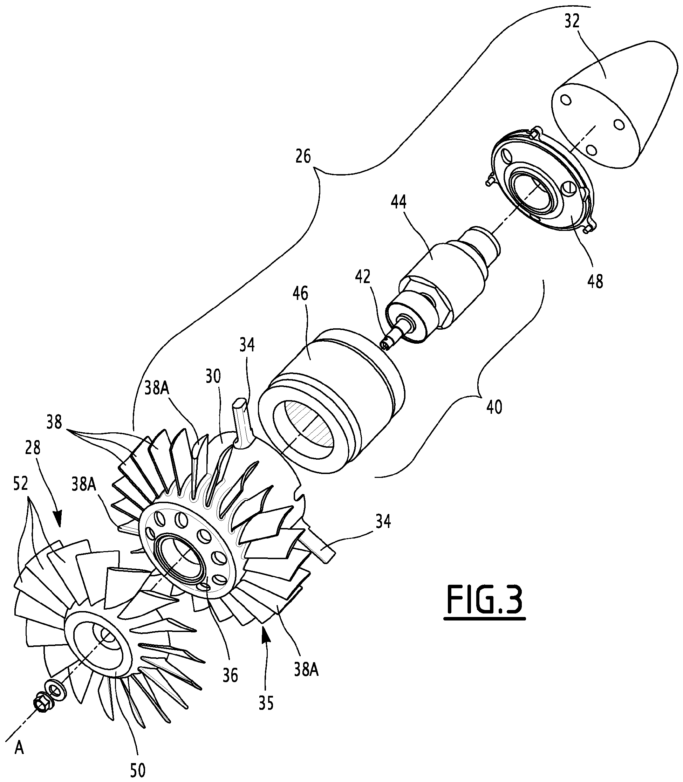

Comme représenté sur la Figure 3, le module électromécanique 12 comporte un bulbe 26 d'axe longitudinal A-A fixé au corps 18 et une roue 28 montée mobile en rotation sur le bulbe 26 autour de l'axe longitudinal A-A.

Le bulbe 26 présente un corps redresseur du flux gazeux 30 portant une ogive 32.

Le corps redresseur 30 possède une forme sensiblement cylindrique d'axe longitudinal A-A et est prolongé à une extrémité par un élément redresseur 35 du flux gazeux.

Le corps redresseur 30 comporte un noyau 36 et une pluralité d'ailettes 38 disposées sur toute la circonférence du noyau 36 et faisant saillie sensiblement radialement vers l'extérieur depuis le noyau 36.

Certaines des ailettes 38, par exemple trois ailettes 38A, ainsi que des bras arrière 34, s'étendant à partir du corps redresseur 30 dans un plan parallèles aux ailettes 38, servent également à fixer le corps redresseur 30 au corps 18.

Un moteur électrique 40 d'entraînement de la roue 28 est porté par le corps redresseur 30 et logé à l'intérieur du corps redresseur 30. Le moteur 40 est disposé suivant l'axe longitudinal A-A du ventilateur 10.

Le moteur 40 comporte un arbre 42 portant à son extrémité la roue 28, un rotor 44 solidaire de l'arbre 42 et un stator 46 solidaire du corps redresseur 30.

L'arbre 42 est porté par deux roulements à billes 47, solidaires du rotor 44, disposés de part et d'autre du moteur 40, un premier roulement étant disposé entre le moteur 40 et la roue 28 et porté par l'élément redresseur 35, et un deuxième roulement étant disposé à l'opposé de la roue 28 par rapport au moteur 40 et porté par un flasque 48 de fixation du corps redresseur 30 au carénage 32.

La roue 28 est disposée du côté du bulbe 26 par lequel l'air est aspiré.

La roue 28 comporte un moyeu 50 relié à l'arbre 42 et une pluralité de pales 52 disposées sur toute la circonférence du moyeu 50 et faisant saillie sensiblement radialement vers l'extérieur depuis le moyeu 50.

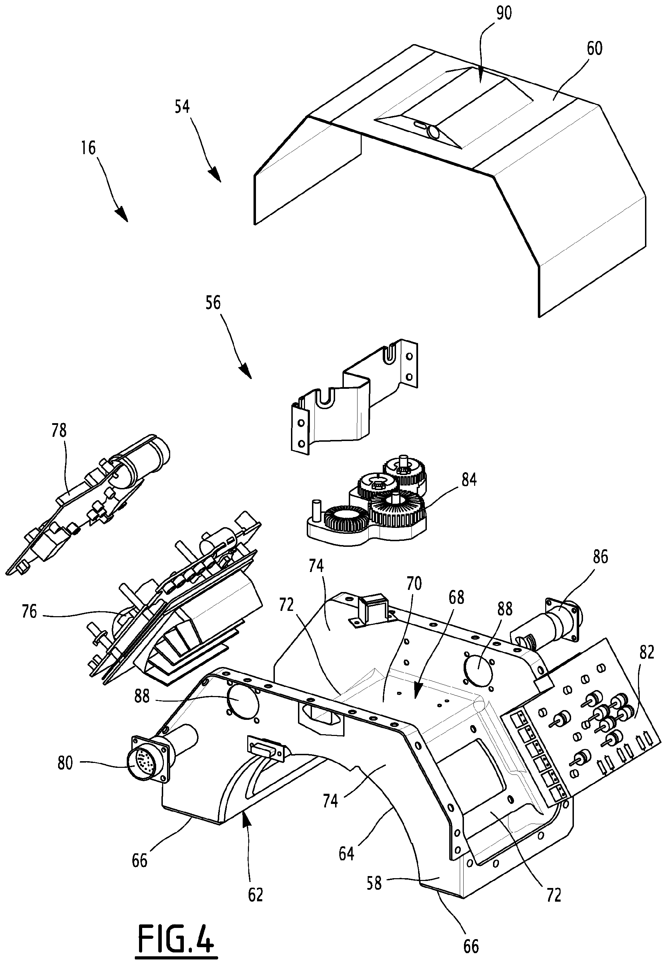

La Figure 4 représente le module électronique 16 du ventilateur 10.

Le module électronique 16 comporte un boîtier 54 et une pluralité de composants électroniques 56 logés à l'intérieur du boîtier 54.

Le boîtier 54 comporte un capot 60 de fermeture.

Le boîtier 54 comprend une surface inférieure 62 présentant une partie centrale 64 et deux parties latérales 66 prolongeant de part et d'autre la partie centrale 64.

La partie centrale 64 possède une forme sensiblement demi-cylindrique, complémentaire de celle du corps 18, tandis que les parties latérales 66 sont sensiblement planes de manière à coopérer avec les brides de fixation 22 du corps 18 pour fixer le boîtier 54 sur le corps 18.

Le boîtier 54 comprend une surface supérieure 68 présentant trois tronçons plans dont un tronçon central 70, s'étendant sensiblement parallèlement aux parties latérales 66 et prolongé de part et d'autre par un tronçon latéral 72 incliné par rapport au tronçon central 70.

Le boîtier 54 comprend également deux parois transversales 74 parallèles qui s'étendent sensiblement verticalement depuis la surface supérieure 68.

Le capot 60 présente une forme sensiblement identique à celle de la surface supérieure 68 du boîtier 54 et est fixée sur celui-ci, notamment le long des bords des parois transversales 74, de sorte à définir un logement entre la surface supérieure 68 et le capot 60 pour loger les composants électroniques 56.

La pluralité de composants électroniques est fixée sur le boîtier 54 et se répartit en deux groupes : un groupe de commande et un groupe de puissance.

Le groupe de commande comprend entre autres une carte de commande 76, une carte CCS 78 et un faisceau de commande 80. La carte de commande 76 et la carte CCS 78 sont montés sur le boîtier 54 entre la surface supérieure 68 et le capot 60.

Le groupe de puissance comprend entre autres un autotransformateur 82, une carte self 84 et un faisceau de puissance 86. L'autotransformateur 82 et la carte self 84 sont montés sur le boîtier 54 entre la surface supérieure 68 et le capot 60.

Le faisceau de commande 80 et le faisceau de puissance 86 sont montés dans des orifices respectifs 88, par exemple prévus chacun sur une paroi 74, de façon à permettre la connexion de câbles électriques entre les composants électroniques, disposés entre la surface supérieure 68 et le capot 60, et le premier module électromécanique 12.

Le troisième module électronique 16 est raccordé au premier module électromécanique 12 par des câbles électriques (non représentés).

Le procédé de fabrication du ventilateur 10 est expliqué ci-dessous.

Les modules électromécanique 12, mécanique 14 et électronique 16 sont fabriqués indépendamment les uns des autres.

Le module électromécanique 12 est ensuite monté à l'intérieur du module mécanique 14 en fixant les trois ailettes 38A et les trois bras arrière 34 sur le corps 18. Le corps redresseur 30 est donc monté de façon amovible sur le corps 18.

Puis le module électronique 16 est monté sur le module mécanique 14 en fixant le boîtier 54 sur les brides de fixation 22.

Afin de limiter les risques de propagation d'une déflagration et d'incendie lorsque le ventilateur fonctionne dans un environnement contenant des vapeurs de carburant, le capot 60 comprend un échappement 90 de protection contre les déflagrations monté sur la surface supérieure 94 du capot 60. L'échappement 90 comprend une paroi supérieure 96 s'étendant à distance de la surface supérieure 94 du capot 60 et deux parois inclinées 98 s'étendant chacune de part et d'autre de la paroi supérieure 96 et joignant la paroi supérieure 96 à la surface supérieure 94 du capot. La paroi supérieure 96 forme un angle par rapport à la surface supérieure 94 du capot 60. C'est-à-dire que la distance séparant la paroi supérieure 96 de la surface supérieure 94 augmente de la partie extrême de la paroi supérieure 96 située du côté par lequel l'air est aspiré à la partie extrême de la paroi supérieure opposée. Cette inclinaison de la paroi supérieure 96 et des parois inclinées 98 permet un écoulement de l'eau se déposant à l'intérieur de l'échappement 90 de protection contre les déflagrations afin d'évacuer celle-ci efficacement.

Les parois supérieure 96 et inclinées 98 définissent un espace 100 s'étendant sensiblement axialement entre la surface supérieure 94 et la paroi supérieure 96. La surface supérieure 94 du boîtier 54 comprend au moins un orifice 101 de communication entre l'intérieur du boîtier 54 et l'espace 100. L'espace 100 est fermé de part et d'autre des parois supérieure 96 et inclinées 98 par deux parois d'extrémité 102 et 103 sensiblement verticales s'étendant sensiblement perpendiculairement à la direction axiale. La paroi d'extrémité 102 située du côté par lequel l'air est aspirée présente une hauteur supérieure à la paroi d'extrémité 103 située du côté opposé de l'espace 100 et comprend un orifice 104 d'évacuation de la surpression, par exemple sensiblement circulaire et occupant la majeure partie de la hauteur de la paroi d'extrémité d'un côté de l'axe A-A. L'orifice 104 est par exemple disposé de part et d'autre de l'axe A-A. La paroi d'extrémité 102 comprend en outre un orifice 106 d'évacuation de l'eau et de l'air de l'espace 100. L'orifice 106 présente par exemple une forme de fente s'étendant perpendiculairement à la direction axiale sous la paroi supérieure 96.

Comme représenté sur la Figue 6, une pluralité de parois verticales 108 s'étendant sensiblement perpendiculairement à la direction axiale sont réparties le long de l'espace 100 entre les parois d'extrémité 102 et 103. Ces parois verticales 108 s'étendent sur toute la hauteur de l'espace 100 mais n'occupent qu'une partie de la largeur de celui-ci. Ainsi, chaque paroi verticale 108 comprend une ouverture 110 s'étendant d'un côté de l'axe A-A de sorte à permettre la circulation de l'eau dans l'espace 100. Les ouvertures 110 sont disposées alternativement d'un côté et de l'autre de l'axe A-A de sorte à former des chicanes entre les parois verticales 108.

Des ailettes 112 sont en outre disposées entre les parois verticales 108 et s'étendent sensiblement verticalement à partir de la paroi supérieure 96 parallèlement aux parois verticales 108. Les parois 108 et les ailettes 112 s'étendent sensiblement perpendiculairement à la surface supérieure 96 du capot 60 et sont inclinées par rapport à la paroi supérieure 94, par exemple d'un angle sensiblement égal à 5°.

Les parois verticales 108 et les ailettes 112 permettent de cloisonner l'espace 100 afin d'éviter la propagation d'une flamme en cas de déflagration due au troisième module électronique 16 fonctionnant dans un environnement susceptible de contenir des vapeurs de carburant. Les ouvertures 110 et les ailettes 112 laissent tout de même passer l'air afin d'évacuer les surpressions produite par la déflagration dans l'espace 100 et l'eau due à la condensation lors de l'utilisation du ventilateur.

Ainsi, l'échappement 90 de protection contre les déflagrations permet de contenir une déflagration et la propagation d'un incendie dues au fonctionnement du troisième module électronique 16 fonctionnant dans un environnement susceptible de contenir des vapeurs de carburant tout en permettant le drainage efficace des liquides de condensation.

La fixation du capot 60 est réalisée par des écrous sertis sur le boîtier 54 et le boîtier 54 est vissé par des vis sur le corps 18. La fixation de l'échappement 90 sur le capot 60 se fait par exemple par rivetage afin d'assurer une étanchéité optimale entre ces différents éléments.

L'invention propose donc un ventilateur simple à fabriquer qui permet de limiter ainsi les coûts de production correspondants.

En effet, le fait que les trois modules sont fabriqués indépendamment les uns des autres permet d'avoir trois lignes de production indépendantes et donc une meilleure gestion industrielle de la fabrication du ventilateur.

Ainsi, si une des lignes de production s'arrête pour quelque raison que ce soit, par exemple une panne ou le défaut d'un ou plusieurs composants, cela n'affectera pas les deux autres lignes de production.

De plus, le ventilateur étant assemblé par blocs, il est possible de démonter un seul module de façon isolée à des fins de test, maintenance, rechange, etc, sans avoir à démonter le ventilateur dans son ensemble.

En outre, la conception modulaire par fonctions du ventilateur permet d'obtenir des ventilateurs « hybrides », par exemple en assemblant le module électromécanique d'un premier type de ventilateur avec le module mécanique d'un deuxième type de ventilateur et le module électronique d'un troisième type de ventilateur.

## Revendications

1. Ventilateur (10) du type comprenant :
- un premier module électromécanique (12) comportant une roue (28) portée par un arbre (42) accouplé à un moteur d'entraînement (40) ;
- un deuxième module mécanique (14) comportant un corps (18) délimitant un espace (20) de réception du premier module électromécanique (12) dans lequel sont reçus la roue (28) et le moteur d'entraînement (40) ; et
- un troisième module électronique (16) comportant une pluralité de composants électroniques (56),
**caractérisé en ce que** le troisième module électronique (16) comporte un boîtier (54) dans lequel est logée la pluralité de composants électroniques (56), le boîtier (54) comprenant un échappement (90) de protection contre les déflagrations comprenant une paroi supérieure (96) et deux parois inclinées (98) s'étendant de part et d'autre de la paroi supérieure (96) de sorte à former un espace (100) s'étendant sensiblement axialement entre la surface supérieure du boîtier (54) et la paroi supérieure (96) afin de permettre l'évacuation des surpressions en cas de déflagration.

2. Ventilateur (10) selon la revendication 1, **caractérisé en ce que** le boîtier (54) comprend un capot (60) de forme sensiblement complémentaire au boîtier (54), la pluralité de composants électroniques (56) étant logée entre ledit boîtier (54) et ledit capot (60).

3. Ventilateur (10) selon la revendication 2, **caractérisé en ce que** l'échappement (90) est monté sur le capot (60), l'espace (100) s'étendant entre la surface supérieure (94) du capot (60) et la paroi supérieure (96) de l'échappement.

4. Ventilateur (10) selon l'une quelconque des revendications 1 à 3, **caractérisé en ce que** l'espace (100) est cloisonné par deux parois d'extrémités (102, 103) s'étendant de part et d'autre de la paroi supérieure (96) sensiblement perpendiculairement à la direction axiale et par une pluralité de parois verticales (108) s'étendant dans l'espace (100) entre les parois d'extrémités.

5. Ventilateur (10) selon la revendication 4, **caractérisé en ce que** les parois verticales (108) comprennent chacune une ouverture (110), les ouvertures (110) étant agencées pour former des chicanes à l'intérieur de l'espace (100) afin de permettre la circulation de l'air et des liquides dans l'espace (100) tout en empêchant la propagation d'une flamme dans ledit espace (100).

6. Ventilateur (10) selon la revendication 4 ou 5, **caractérisé en ce que** l'une des parois d'extrémité (102, 103) comprend une ouverture (104) permettant l'évacuation de la surpression et des liquides de l'espace (100).

7. Ventilateur (10) selon l'une quelconque des revendications 1 à 6, **caractérisé en ce que** le boîtier (54) est monté de manière amovible sur le corps (18) du deuxième module mécanique (14),

8. Ventilateur (10) selon l'une quelconque des revendications 1 à 7, **caractérisé en ce que** le premier module électromécanique (12) comporte un corps redresseur du flux gazeux (30) monté de manière amovible sur le corps (18) du deuxième module mécanique (14).

9. Ventilateur (10) selon l'une quelconque des revendications 1 à 8, **caractérisé en ce que** le premier module électromécanique (12) et le troisième module électronique (16) sont reliés l'un à l'autre au moyen de câbles électriques.

10. Système aéronautique **caractérisé en ce qu'**il comprend un ventilateur (10) selon l'une quelconque des revendications 1 à 9.

## Patentansprüche

1. Ventilator (10) vom Typ, aufweisend:
- ein erstes, elektromechanisches Modul (12), das ein Rad (28), das von einer Welle (42), die mit einem Antriebsmotor (40) gekuppelt ist, getragen wird, aufweist,
- ein zweites, mechanisches Modul (14), das einen Körper (18) aufweist, welcher einen Raum (20) zur Aufnahme des ersten, elektromechanischen Moduls (12) abgrenzt, in welchem das Rad (28) und der Antriebsmotor (40) aufgenommen sind, und
ein drittes, elektronisches Modul (16), welches eine Mehrzahl von elektronischen Bauteilen (56) aufweist,
**gekennzeichnet dadurch, dass** das dritte, elektronische Modul (16) ein Gehäuse (54) aufweist, in welchem die Mehrzahl von elektronischen Bauteilen (56) untergebracht ist, wobei das Gehäuse (54) eine Auslasseinrichtung (90) zum Schutz gegen Explosionen aufweist, welche aufweist eine obere Wand (96) und zwei geneigte Wände (98), welche sich beidseitig der oberen Wand (96) derart erstrecken, dass sie einen Raum (100) bilden, der sich im Wesentlichen axial zwischen der oberen Fläche des Gehäuses (54) und der oberen Wand (96) erstreckt, um das Abführen von Überdrücken im Fall einer Explosion zu erlauben.

2. Ventilator (10) gemäß dem Anspruch 1, **gekennzeichnet dadurch, dass** das Gehäuse (54) aufweist eine Haube (60) von einer Form, die im Wesentlichen zum Gehäuse (54) komplementär ist, wobei die Mehrzahl von elektronischen Bauteilen (56) zwischen dem Gehäuse (54) und der Haube (60) untergebracht ist.

3. Ventilator (10) gemäß dem Anspruch 2, **gekennzeichnet dadurch, dass** die Auslasseinrichtung (90) auf der Haube (60) montiert ist, wobei sich der Raum (100) zwischen der oberen Fläche (94) der Haube (60) und der oberen Wand (96) der Auslasseinrichtung erstreckt.

4. Ventilator (10) gemäß irgendeinem der Ansprüche 1 bis 3, **gekennzeichnet dadurch, dass** der Raum (100) mittels zwei Endwänden (102, 103), welche sich beidseitig der oberen Wand (96) im Wesentlichen senkrecht zur Axialrichtung erstrecken und mittels einer Mehrzahl von Vertikalwänden (108), welche sich im Raum (100) zwischen den Endwänden erstrecken, unterteilt ist.

5. Ventilator (10) gemäß dem Anspruch 4, **gekennzeichnet dadurch, dass** die Vertikalwände (108) jeweils eine Öffnung (110) aufweisen, wobei die Öffnungen (110) angeordnet sind, um Ablenkplatten im Inneren des Raums (110) zu bilden, um die Zirkulation der Luft und der Flüssigkeiten im Raum (100) zu erlauben und gleichzeitig die Ausbreitung einer Flamme in dem Raum (100) zu verhindern.

6. Ventilator (10) gemäß dem Anspruch 4 oder 5, **gekennzeichnet dadurch, dass** eine der Endwände (102, 103) eine Öffnung (104) aufweist, welche das Abführen des Überdrucks und der Flüssigkeiten aus dem Raum (110) erlaubt.

7. Ventilator (10) gemäß irgendeinem der Ansprüche 1 bis 6, **gekennzeichnet dadurch, dass** das Gehäuse (54) in abnehmbarer Weise an dem Körper (18) des zweiten, mechanischen Moduls (14) angebracht ist.

8. Ventilator (10) gemäß irgendeinem der Ansprüche 1 bis 7, **gekennzeichnet dadurch, dass** das erste, elektromechanische Modul (12) einen Gasstrom-Gleichrichtungskörper (30) aufweist, der in abnehmbarer Weise an dem Körper (18) des zweiten, mechanischen Moduls (14) angebracht ist.

9. Ventilator (10) gemäß irgendeinem der Ansprüche 1 bis 8, **gekennzeichnet dadurch, dass** das erste, elektromechanische Modul (12) und das dritte, elektronische Modul (16) miteinander mittels elektrischer Kabel verbunden sind.

10. Aeronautisches System, **gekennzeichnet dadurch, dass** es einen Ventilator (10) gemäß irgendeinem der Ansprüche 1 bis 9 aufweist.

## Claims

1. A fan (10) of the type comprising:
- a first electromechanical module (12) including a wheel (28) supported by a shaft (42) coupled to a driving motor (40);
- a second mechanical module (14) including a body (18) delimiting a space (20) for receiving the first electromechanical module (12) in which the wheel (28) and the driving motor (40) are received; and
- a third electronic module (16) including a plurality of electronic components (56),
**characterized in that** the third electronic module (16) comprises a housing (54) in which the plurality of electronic components (56) is housed, the housing (54) comprising a deflagration protection exhaust (90) comprising an upper wall (96) and two inclined walls (98) extending on either side of the upper wall (96) so as to form a space (100) extending substantially axially between the upper surface of the housing (54) and the upper wall (96) in order to allow the evacuation of overpressures in case of deflagration.

2. Then fan (10) according to claim 1, **characterized in that** the housing (54) comprises a cover (60) with a shape substantially complementary to the housing (54), the plurality of electronic components (56) being housed between said housing (54) and said cover (60).

3. The fan (10) according to claim 2, **characterized in that** the exhaust (90) is mounted on the cover (60), the space (100) extending between the upper surface (94) of the cover (60) and the upper wall (96) of the exhaust

4. The fan (10) according to any one of claims 1 to 3, **characterized in that** the space (100) is partitioned by two end walls (102, 103) extending on either side of the upper wall (96) substantially perpendicular to the axial direction and by a plurality of vertical walls (108) extending in the space (100) between the end walls.

5. The fan (10) according to claim 4, **characterized in that** the vertical walls (108) each comprise an opening (110), the openings (110) being arranged to form baffles inside the space in order to allow the circulation of air and liquids in the space (100) while preventing the propagation of a flame in said space (100).

6. The fan (10) according to claim 4 or 5, **characterized in that** one of the end walls (102, 103) comprises an opening (104) making it possible to discharge overpressures and liquids from the space (100).

7. The fan (10) according to any one of claims 1 to 6, **characterized in that** the housing (54) is removably mounted on the body (18) of the second mechanical module (14).

8. The fan (10) according to any one of claims 1 to 7, **characterized in that** the first electromechanical module (12) includes a gas flow rectifier body (30) removably mounted on the body (18) of the second mechanical module (14).

9. The fan (10) according to any one of claims 1 to 8, **characterized in that** the first electromechanical module (12) and the third electronic module (16) are connected to each other using electrical cables.

10. An aeronautic system **characterized in that** it comprises a fan (10) according to any one of claims 1 to 9.
